# NEUE EUROPÄISCHE PATENTSCHRIFT

(11) **EP 1 982 087 B2**
(45) Veröffentlichungstag und Bekanntmachung des Hinweises auf die Entscheidung über den Einspruch: **18.04.2018**
(45) Hinweis auf die Patenterteilung: 08.04.2015
(21) Anmeldenummer: 07703015.3
(22) Anmeldetag: 25.01.2007
(51) Int. Cl.: F16D 65/092, F16D 55/00

(54) **SCHEIBENBREMSE UND BREMSBELAG FÜR EINE SCHEIBENBREMSE, INSBESONDERE FÜR EIN NUTZFAHRZEUG**
DISC BRAKE AND BRAKE PAD FOR A DISC BRAKE, ESPECIALLY FOR A UTILITY VEHICLE
FREIN À DISQUE ET GARNITURE DE FREIN POUR FREIN À DISQUE, EN PARTICULIER POUR VÉHICULE UTILITAIRE

(30) Priorität: 26.01.2006 DE 102006003748
(43) Veröffentlichungstag der Anmeldung: 22.10.2008
(73) Patentinhaber: KNORR-BREMSE Systeme für Nutzfahrzeuge GmbH, 80809 München (DE)
(72) Erfinder: CAMILO-MARTINEZ, José, 82008 Unterhaching (DE); PRITZ,Wolfgang, 94501 Aldersbach (DE)
(74) Vertreter: Specht, Peter
(86) Internationale Anmeldenummer: PCT/EP2007/000618
(87) Internationale Veröffentlichungsnummer: WO 2007/085441

(56) Entgegenhaltungen:
- EP-A- 0 429 110
- EP-A1- 1 473 481
- WO-A-2006/040062
- DE-A1- 2 236 749
- DE-A1- 2 734 585
- DE-A1- 3 217 759
- DE-A1- 3 708 699
- DE-A1-102004 052 541
- DE-C1- 19 855 614
- DE-T2- 60 317 116
- DE-U1-202004 006 651
- GB-A- 880 870
- KR-A- 20010 039 713
- US-A- 3 684 061
- US-A- 3 976 169
- US-A- 5 472 068
- US-B1- 6 357 559

## Beschreibung

Die Erfindung betrifft eine Scheibenbremse, insbesondere für ein Nutzfahrzeug, gemäß dem Oberbegriff des Anspruchs 1.

Eine gattungsgemäße Scheibenbremse ist beispielsweise aus der DE 199 07 958 A1 bekannt. In dieser Literatur ist gezeigt und geschrieben, dass zum Schutz des Innenraumes des Bremssattels, der Stellspindeln einer Zuspanneinrichtung beherbergt, eine Montage- und Funktionsöffnung des Bremssattels mittels einer Verschlussplatte verschlossen ist, wobei diese Verschlussplatte durch Schrauben am Bremssattel befestigt ist.

Prinzipiell kann es bei der Montage der Bremsbeläge zu Fehlmontagen kommen, sowohl durch Einsatz eines falschen Bremsbelages, der nicht für die jeweilige Scheibenbremse vorgesehen und zulässig ist, wie auch durch rechts/links Verwechseln der Bremsbeläge bei deren Einbau, wobei die Bremsbeläge unbemerkt um 180° verdreht montiert werden können, so dass die Belagträgerplatte zur Bremsscheibe ausgerichtet ist. Diese Fehlmontage kann, da die Funktionssicherheit der Scheibenbremse nicht mehr gegeben ist, zu schweren und gefährlichen Betriebsstörungen des Fahrzeuges führen.

Neben der genannten Fehlmontage erlauben es die bekannten Scheibenbremsen auch, einen Bremsbelagersatz mit Fremdfabrikaten durchzuführen, die keine Zulassung für das betreffende Fahrzeug bzw. die betreffende Scheibenbremse haben.

Dies kann ebenfalls zu einer Einschränkung der Betriebssicherheit der Scheibenbremse führen, die prinzipiell nicht akzeptabel ist, zumal Scheibenbremsen zu den Bauteilen eines Fahrzeuges zählen, denen in sicherheitsrelevanter Hinsicht eine besondere Bedeutung zukommt.

Zwar ist schon versucht worden, Bremsbeläge zu kodieren, jedoch können die bekannten Kodierungen durch einfache mechanische Bearbeitung, beispielsweise mit Hammer und Meißel entfernt werden, so dass problemlos unkodierte Bremsbeläge von nicht autorisierten Herstellern eingesetzt werden können.

In der US 6,357,559 B1 ist eine Scheibenbremse offenbart, bei der die Belagträgerplatte eines Bremsbelages mit einem Vorsprung versehen ist, der in eine Aussparung des Bremssattels im Bereich des Belagschachtes eingreift, wodurch eine Kodierung erreicht wird, durch die ein Fehleinbau verhindert wird.

Der Erfindung liegt daher die Aufgabe zugrunde, eine Scheibenbremse der gattungsgemäßen Art so weiter zu entwickeln, dass mit konstruktiv und fertigungstechnisch geringem Aufwand eine Verbesserung der Betriebssicherheit erreicht wird.

Diese Aufgabe wird durch eine Scheibenbremse mit den Merkmalen des Anspruchs 1 gelöst.

Durch diese konstruktive Ausbildung wird erreicht, dass nur der für diesen Einsatzzweck bestimmte Bremsbelag montiert werden kann, wobei gleichzeitig sichergestellt ist, dass der Bremsbelag nur so einsetzbar ist, dass seine Reibbelagseite der Bremsscheibe zugewandt ausgerichtet ist.

Zum anderen ist kein Fremdprodukt einsetzbar, da die im Sinne einer Kodierung miteinander korrespondierenden Erhebungen und Ausnehmungen des Verschlussdeckels einerseits und der Belagträgerplatte andererseits nur in einer bestimmten Konfiguration miteinander kompatibel sind.

Diese Konfiguration, d.h. die Form und Anordnung der Korrespondenzteile werden werksseitig festgelegt, so dass nur der Bremsbelag als Austauschteil einsetzbar ist, der die vom Hersteller der Scheibenbremse vorgegebenen Erhebungen bzw. Ausnehmungen aufweist.

Die Kodierung erlaubt darüber hinaus die vorherige Festlegung der Bremsbeläge für einen bestimmten Einbauort. So können Bremsbeläge mit unterschiedlichen Reibwerten der Reibbeläge, wie sie für einen Innenbelag und einen Außenbelag gefordert werden, exakt zugeordnet werden, um zum Beispiel dem unterschiedlichen Rissverhalten einer Bremsscheibe Rechnung zu tragen. Eine Vertauschung der beiden Bremsbeläge kann somit ausgeschlossen werden, wenn die Kodierung beider Bremsbeläge bzw. der zugeordneten Verschlussdeckel unterschiedlich ist. Nach einer vorteilhaften Ausbildung der Erfindung ist vorgesehen, dass als Erhebungen im Sinne der Erfindung zumindest ein Teil der Schrauben dient, mit denen der Verschlussdeckel am Bremssattel befestigt ist, wobei die Schrauben, insbesondere die Schraubenköpfe entsprechend modifiziert sind und in Eingriff mit in der Belagträgerplatte dazu angepassten Ausnehmungen einliegen.

In an sich bekannter Weise sind die Schauben im Umfangsbereich des Verschlussdeckels angebracht. Je nach Variierung der Position innerhalb des Umfangs kann eine Kodierung erreicht werden, durch die ausschließlich für einen vorbestimmten Typ vorgesehene Bremsbeläge einsetzbar sind, die dann dazu entsprechende Ausnehmungen aufweisen, wobei die Schraubenköpfe der Schrauben in die Ausnehmungen hineinragen.

Eine Variierung des Kodes ist auch dadurch herstellbar, dass die Schraubenköpfe unterschiedlich gestaltet sind, beispielsweise in Form, Durchmesser und Länge. Dabei können diese Unterschiede, an die die Ausnehmungen der Belagträgerplatte angepasst sind, eine Vielzahl von Kodierungen ergeben, die unter anderem dazu genutzt werden können, dass ein rechts/links Vertauschen der Bremsbeläge ausgeschlossen ist.

Ein weiterer Vorteil der Erfindung liegt darin, dass im Betrieb befindliche Scheibenbremse nachgerüstet werden können, wobei dann bei einem Austausch der Bremsbeläge die zugeordneten Schrauben des Verschlussdeckels ebenfalls ausgetauscht werden. Zweckmäßigerweise ist in diesem Falle nur die Kodierung durch Veränderung der Form, der Länge und/oder des Durchmessers vorzusehen.

Eine besondere Bedeutung kommt auch dem Umstand zu, dass die neue Scheibenbremse mit geringem fertigungstechnischen Aufwand realisierbar ist. Da solche Scheibenbremsen, insbesondere aber auch die Ersatz-Bremsbeläge in großen Stückzahlen hergestellt werden, bietet die Erfindung den Vorteil einer wesentlich verbesserten Betriebssicherheit mit geringem Aufwand.

Weitere vorteilhafte Ausbildungen sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen Teilausschnitt einer erfindungsgemäßen Scheibenbremse in einer Seitenansicht
- Figur 2: einen Teilausschnitt der Scheibenbremse in einer Draufsicht

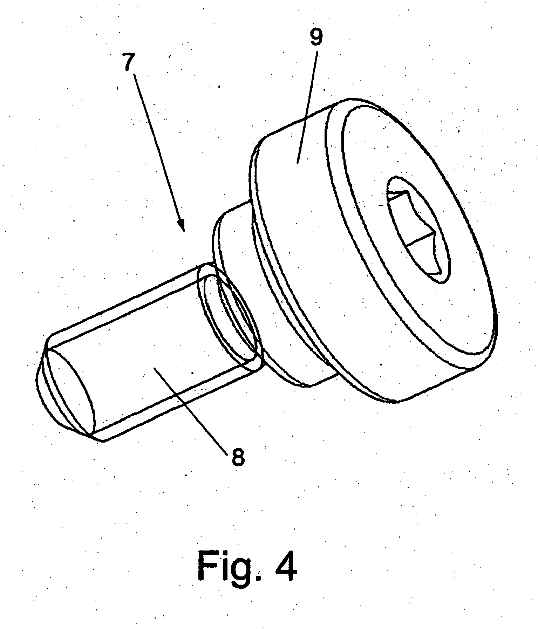

- Figuren 3 - 5: jeweils eine Einzelheit der Scheibenbremse in einer perspektivischen Ansicht.

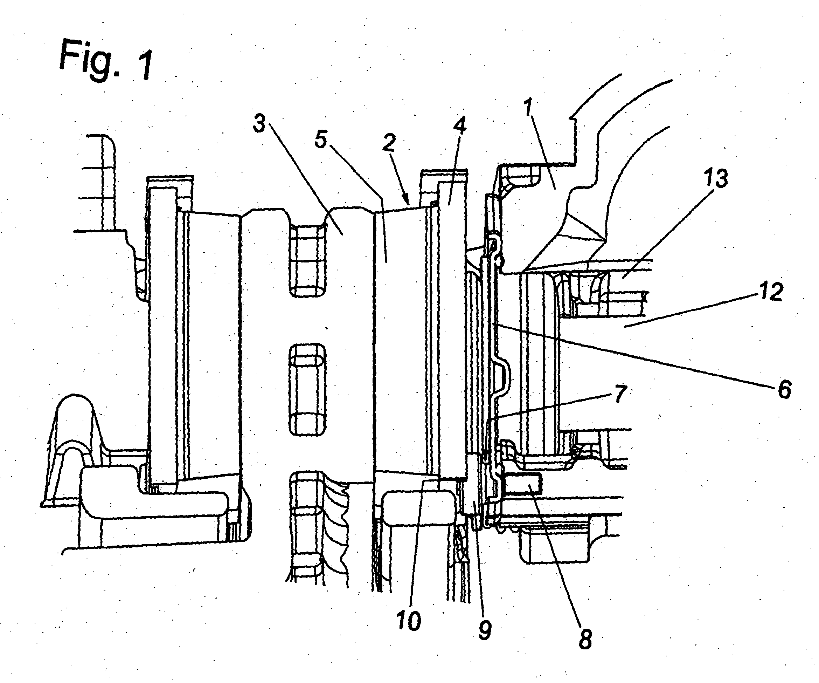

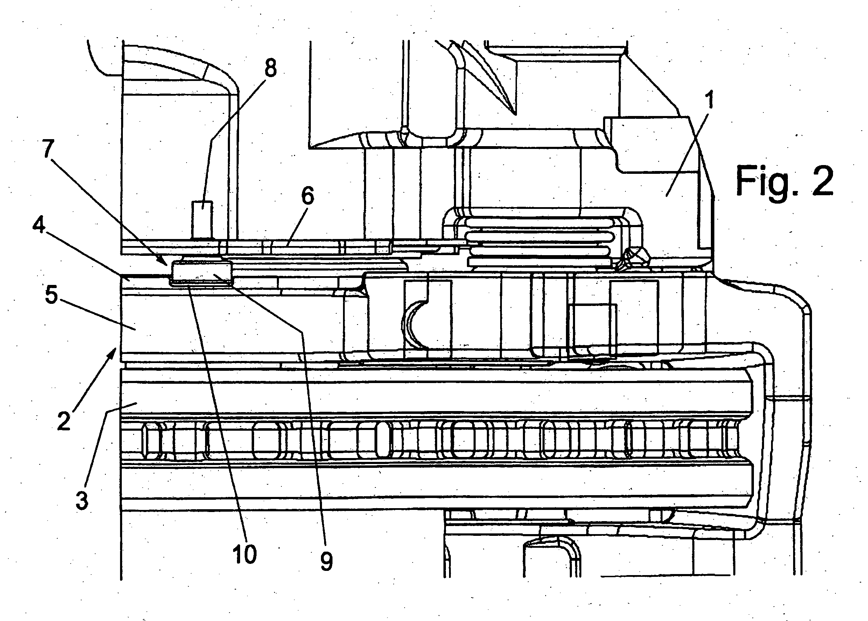

In den Figuren 1 und 2 ist eine Scheibenbremse, insbesondere für ein Nutzfahrzeug erkennbar, mit einem Bremssattel 1, der eine Bremsscheibe 3 übergreift, mit der beidseitig jeweils ein aus einer Belagträgerplatte 4 und einem Reibbelag 5 bestehender Bremsbelag 2 in Wirkverbindung bringbar ist, wobei der Reibbelag 5 beim Bremsen gegen die Bremsscheibe 3 gepresst wird.

Hierzu sind Stellspindeln 12 in einem Montageraum 13 angeordnet, die einerseits mit einer nicht gezeigten Zuspanneinrichtung verbunden sind und andererseits an der Belagträgerplatte 4 anliegen.

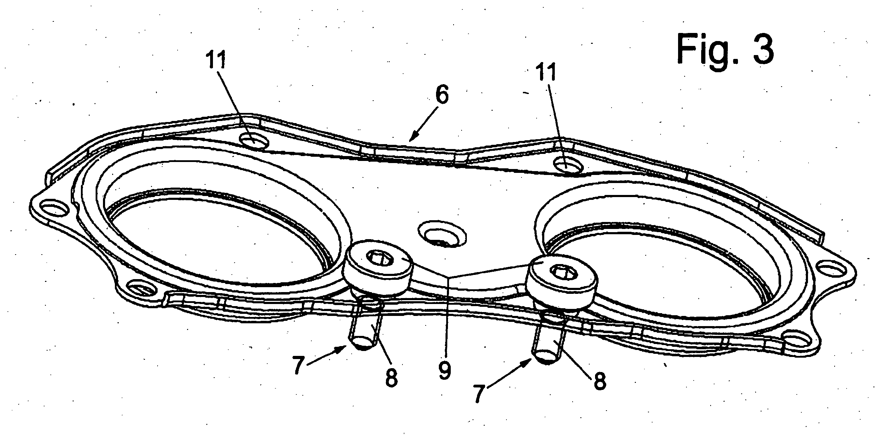

In Richtung der Bremsscheibe 3 ist der Montageraum 13 durch einen Verschlussdeckel 6 verschlossen und zwar mittels Schrauben 7, die umfänglich in Gewindebohrungen des Bremssattels 1 eingedreht sind, wobei die Schrauben 7 durch Bohrungen 11 (Figur 3) des Verschlussdeckels 6 geführt sind.

Zumindest ein Teil der Schrauben 7, im vorliegenden Ausführungsbeispiel zwei Schrauben 7 sind so ausgebildet, dass sie aus einem an den Bremssattel 1 eingedrehten Schraubenschaft 8 und einem zylindrischen Schraubenkopf 9 bestehen, der als separates Teil gefertigt mit dem jeweils zugeordneten Schraubenschaft 8 verbunden sind.

Dieser Schraubenkopf 9 bildet eine Erhebung, die in eine Ausnehmung 10 der Belagträgerplatte 4 ragt, wobei der Schraubenkopf 9 und die Ausnehmung 10 im Sinne einer Kodierung miteinander korrespondieren. Das heißt, die Schraubenköpfe 9 und die Ausnehmungen 10 sind in Anordnung und Dimensionierung so einander angepasst, dass bei festgeschraubtem Verschlussdeckel 6 nur ein entsprechend modifizierter Bremsbelag 2 einsetzbar ist, dessen Belagträgerplatte 4 die Schraubenköpfe 9 in der gewünschten Weise aufnimmt.

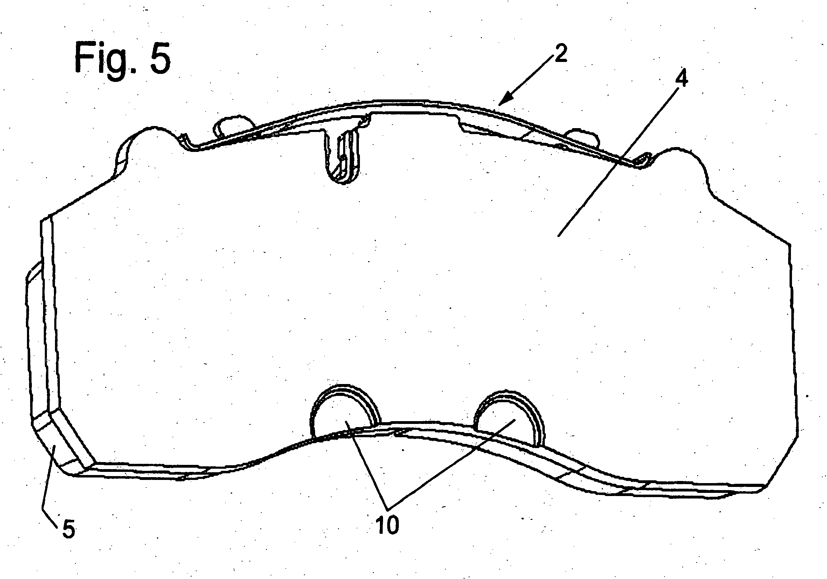

Wie insbesondere die Figur 5 sehr deutlich zeigt, sind die als Sackausnehmungen ausgebildeten Ausnehmungen 10, ausgehend von der Schmalseite der Belagträgerplatte 4 nach unten hin offen.

Sowohl die Form der Schraubenköpfe 9 als auch deren Dimensionierung sind insoweit frei wählbar, so dass eine große Vielfalt an unterschiedlichen Kodierungen erreicht werden kann.

Um eine einfache Montage, insbesondere ein einfaches Einsetzen des Bremsbelages 2 von oben her in den Bremssattel 1 zu erleichtern, sind zweckmäßigerweise die die Erhebungen bildenden Schrauben 7 in dem, in Einschubrichtung unteren Bereich des Verschlussdeckels vorgesehen.

### Bezugszeichenliste

- 1: Bremssattel
- 2: Bremsbelag
- 3: Bremsscheibe
- 4: Belagträgerplatte
- 5: Reibbelag
- 6: Verschlussdeckel
- 7: Schraube
- 8: Schraubenschaft
- 9: Schraubenkopf
- 10: Ausnehmung
- 11: Bohrung
- 12: Stellspindel
- 13: Montagearm

## Patentansprüche

1. Scheibenbremse, insbesondere für ein Nutzfahrzeug, mit einem Bremssattel (1), der eine mit jeweils aus einer Belagträgerplatte (4) und einem darauf befestigten Reibbelag (5) bestehenden Bremsbelägen (2) in Wirkverbindung bringbare Bremsscheibe (3) übergreift, und mindestens einem den Bremssattel (1) verschließenden und an diesem mittels Schrauben (7) befestigten Verschlussdeckel (6), **dadurch gekennzeichnet, dass** der Verschlussdeckel (6) und die Belagträgerplatte (4) jeweils mindestens eine, im Sinne einer Kodierung miteinander korrespondierende Erhebung und Ausnehmung (10) aufweisen, wobei ein Schraubenkopf (9) zumindest einer der Schrauben (7) des Verschlussdeckels (6) eine Erhebung bildet, die in eine zugeordnete Ausnehmung (10) der Belagträgerplatte (4) ragt.

2. Scheibenbremse nach Anspruch 1, **dadurch gekennzeichnet, dass** mindestens eine mit dem Schraubenkopf (9) versehene Schraube (7), in Einschubrichtung des Bremsbelages (2) gesehenen, am unteren Randbereich des Verschlussdeckels angeordnet ist.

3. Scheibenbremse nach Anspruch 1 oder 2, **dadurch gekennzeichnet, dass** der Schraubenkopf (9) als separates Teil mit einem zugeordneten Schraubschaft (8) verbunden ist, der in den Bremssattel (1) eingedreht ist.

4. Scheibenbremse nach einem der vorhergehenden Ansprüche, **dadurch gekennzeichnet, dass** die Ausnehmung (10) in ihrer Form und Dimensionierung an den Schraubenkopf (9) angepasst ist.

5. Scheibenbremse nach einem der vorhergehenden Ansprüche, **dadurch gekennzeichnet, dass** zwei Erhebungen in Form der Schrauben (7) vorgesehen sind.

6. Scheibenbremse nach einem der vorhergehenden Ansprüche, **dadurch gekennzeichnet, dass** die Ausnehmungen (10) als Sackausnehmungen auf der dem Verschlussdeckel (6) zugewandten Rückseite der Belagträgerplatte (4) ausgebildet sind.

7. Scheibenbremse nach einem der vorhergehenden Ansprüche, **dadurch gekennzeichnet, dass** die Ausnehmung (10) an einem radial inneren Randbereich der Belagträgerplatte (4) vorgesehen ist.

8. Scheibenbremse nach einem der vorhergehenden Ansprüche, **dadurch gekennzeichnet, dass** die Ausnehmung (10) ausgehend von der Schmalseite der Belagträgerplatte (4) offen ist.

## Claims

1. Disc brake, in particular for a commercial vehicle, comprising a brake calliper (1), which straddles a brake disc (3) which can be brought into operative contact with brake pads (2), each comprising a backing plate (4) and, fastened thereon, a friction lining (5), and further comprising at least one closure cover (6) which closes off the brake calliper (1) and is fastened thereto by means of screws (7), **characterised in that** the closure cover (6) and the backing plate (4) each have at least one high spot and recess (10) corresponding to one another in the manner of a coding facility, wherein a screw head (9) of at least one of the screws (7) of the closure cover (6) forms the high spot which extends into an associated recess (10) of the backing plate (4).

2. Disc brake according to claim 1, **characterised in that,** as seen in the direction of insertion of the brake pad (2), at least one screw (7) provided with the screw head (9) is arranged in the lower edge region of the closure cover.

3. Disc brake according to claim 1 or 2, **characterised in that** the screw head (9) is connected as a separate part to an associated screw shank (8) which is tightened into the brake calliper (1).

4. Disc brake according to any of the preceding claims, **characterised in that** the recess (10) is matched to the screw head (9) in its shape and dimensioning.

5. Disc brake according to any of the preceding claims, **characterised in that** two high spots in the form of the screws (7) are provided.

6. Disc brake according to any of the preceding claims, **characterised in that** the recesses (10) are designed as blind holes on the rear side of the backing plate (4), which faces the closure cover (6).

7. Disc brake according to any of the preceding claims, **characterised in that** the recess (10) is provided in a radially inward edge region of the backing plate (4).

8. Disc brake according to any of the preceding claims, **characterised in that** the recess (10) is open starting from the narrow side of the backing plate (4).

## Revendications

1. Frein à disque, notamment pour un véhicule utilitaire, comprenant un étrier (1) de frein, qui chevauche un disque (3) de frein pouvant être mis en liaison d'action avec des garnitures (2) de frein constituées respectivement d'une plaque (4) formant porte-garniture et d'une garniture (5) de friction, qui y est fixée, et au moins un couvercle (6) de fermeture, fermant l'étrier (1) de frein et fixé à celui-ci au moyen de vis (7), **caractérisé en ce que** le couvercle (6) de fermeture et la plaque (4) formant porte-garniture ont respectivement au moins une saillie et une cavité (10) correspondant entre eux dans le sens d'une indexation, une tête (9) d'au moins l'une des vis (7) du couvercle (6) de fermeture formant une saillie, qui fait saillie dans une cavité (10) associée de la plaque (4) formant porte-garniture.

2. Frein à disque suivant la revendication 1, **caractérisé en ce qu'**au moins une vis (7) munie de la tête (9) de vis est disposée, considéré dans le sens d'enfichage de la garniture (2) de frein, à la partie marginale inférieure du couvercle de fermeture.

3. Frein de disque suivant la revendication 1 ou 2, **caractérisé en ce que** la tête (9) de la vis est reliée en tant que pièce distincte à un fût (8) de vis associé, qui est posé dans l'étrier (1) de frein.

4. Frein à disque suivant l'une des revendications précédentes, **caractérisé en ce que** la forme et la dimension de la cavité (10) sont adaptées à la tête (9) de la vis.

5. Frein à disque suivant l'une des revendications précédentes, **caractérisé en ce qu'**il est prévu deux saillies sous la forme des vis (7).

6. Frein à disque suivant l'une des revendications précédentes, **caractérisé en ce que** les cavités (10) sont constituées sous la forme de cavités borgnes du côté arrière, tourné vers le couvercle (6) de fermeture, de la plaque (4) formant porte-garniture.

7. Frein à disque suivant l'une des revendications précédentes, **caractérisée en ce que** la cavité (10) est prévue sur une partie marginale intérieure radialement de la plaque (4) formant porte-garniture.

8. Frein à disque suivant l'une des revendications précédentes, **caractérisée en ce que** la cavité (10) est ouverte à partir du petit côté de la plaque (4) formant porte-garniture.
